# EUROPÄISCHE PATENTANMELDUNG

(11) **EP 2 388 539 A2**
(43) Veröffentlichungstag der Anmeldung: **23.11.2011**
(21) Anmeldenummer: 11163671.8
(22) Anmeldetag: 26.04.2011
(51) Int. Cl.: F24J 2/52

(54) **Montagefuss für Solarmodule sowie Montagesystem mit mehreren solcher Montagefüsse**

(30) Priorität: 17.05.2010 DE 102010029002
(71) Anmelder: HILTI Aktiengesellschaft, 9494 Schaan (LI)
(72) Erfinder: Bragagna, Elio, 6822, Duens (AT); Carbonare, Martin, 6842, Koblach (AT)

(57) **Zusammenfassung**

Die Erfindung betrifft einen Montagefuß (10) für Solarmodule, mit einem Grundkörper (12), der wenigstens eine Standfläche (22) hat, mit welcher sich der Montagefuß (10) an einem Untergrund (24) abstützen kann, einem mit dem Grundkörper (12) verbundenen, oberen Auflager (14) für eine erste schräggestellte Modulplatte (16) und einem mit dem Grundkörper (12) verbundenen, unteren Auflager (18) für eine zur ersten Modulplatte (16) nicht-koplanare, zweite schräggestellte Modulplatte (20), wobei das obere Auflager (14) einen größeren Abstand zu einer von der Standfläche (22) aufgespannten Ebene aufweist als das untere Auflager (18).

Des Weiteren umfasst die Erfindung auch ein Montagesystem mit mehreren solcher Montagefüße (10).

## Beschreibung

Die Erfindung betrifft einen Montagefuß für Solarmodule sowie ein Montagesystem, insbesondere ein Flachdach-Montagesystem für Solarmodule, mit solchen Montagefüßen.

Solaranlagen erfreuen sich derzeit angesichts steigender Energiekosten, zahlreicher Förderprogramme für regenerative Energien und aktueller Diskussionen über die Folgen eines globalen Klimawandels sowohl aus ökonomischen als auch ökologischen Gründen wachsender Beliebtheit. Eigentümer von für Solaranlagen geeigneten Immobilien sind dabei stets bestrebt, den maximalen Energieertrag bei möglichst geringen Investitionen in die Solarmodule und einen "solargerechten" Umbau des Gebäudes zu erzielen.

Es hat sich gezeigt, dass Flachdächer für eine Nutzung durch Solaranlagen besonders geeignet sind, da in der Regel keine oder lediglich minimale bauliche Anpassungen am Gebäude selbst notwendig sind. Üblicherweise wird als Unterkonstruktion lediglich ein Montagesystem aufgebaut, um die Solarmodule schräg zu stellen und nach Süden hin auszurichten, wodurch der Wirkungsgrad und damit die Energieausbeute der Solaranlage deutlich ansteigen.

Um Schäden an der Dachhaut und der bei Flachdächern empfindlichen Dachabdichtung zu vermeiden, wird dieses Montagesystem üblicherweise installiert, ohne eine direkte Befestigung oder Verbindung zum Gebäude herzustellen. Die Sicherung des Montagesystems gegen Verschieben oder Abheben erfolgt über Ballast, wobei jedoch die maximale Traglast des Flachdachs zu beachten ist. Das als Unterkonstruktion dienende Montagesystem bildet somit einen Dachaufsatz, an dem die Solarmodule unter einem gewünschten Neigungswinkel befestigt werden.

Da die Traglast der Dächer limitiert ist, sind im Stand der Technik bereits Maßnahmen zur Ballastreduktion beschrieben, welche auf unterschiedliche Art und Weise schon in heute üblichen Montagesystemen umgesetzt sind.

Aus dem Stand der Technik bekannte Maßnahmen sind z.B. Verbindungselemente, welche einzelne Solarmodule oder Solarmodulreihen der Solaranlage zu einer großen Einheit verbinden, um bei auftretender Windlast unerwünschte Verschiebungen der Solarmodule zu verhindern. Ferner ist es durchaus üblich, Windabweiser einzusetzen, um auf die Solarmodule wirkende Abhebekräfte zu reduzieren.

Aufgabe der Erfindung ist es, einen möglichst einfachen und preiswert herstellbaren Montagefuß sowie ein Montagesystem für Solarmodule zu schaffen, welches sich einerseits mit geringem Aufwand auf einem Untergrund installieren und zu einer großen Einheit verbinden lässt sowie andererseits eine einfache Montage der Solarmodule ermöglicht.

Erfindungsgemäß wird diese Aufgabe gelöst durch einen Montagefuß für Solarmodule, mit einem Grundkörper, der wenigstens eine Standfläche hat, mit welcher sich der Montagefuß an einem Untergrund abstützen kann, einem mit dem Grundkörper verbundenen, oberen Auflager für eine erste schräggestellte Modulplatte und einem mit dem Grundkörper verbundenen, unteren Auflager für eine zur ersten Modulplatte nicht-koplanare, benachbarte, zweite schräggestellte Modulplatte, wobei das obere Auflager einen größeren Abstand zu einer von der Standfläche aufgespannten Ebene aufweist als das untere Auflager.

In seiner hauptsächlichen Funktion als Solarmodul-Träger stellt der Montagefuß höhenversetzte Auflager für bis zu vier Modulplatten zur Verfügung. Des Weiteren übernimmt der Montagefuß auch eine Verbindungsfunktion zwischen zwei Solarmodulreihen, sodass ein Montagesystem, welches mehrere solcher Montagefüße aufweist, mit minimalem Aufwand zu einer modularen Einheit verbunden werden kann und folglich keine unerwünschte Verschiebung einzelner Solarmodule oder einzelner Solarmodulreihen möglich ist.

Als Solarmodulreihe werden dabei mehrere benachbarte Modulplatten bezeichnet, die im Wesentlichen koplanar ausgerichtet sind, das heißt im Wesentlichen in einer Ebene liegen. Im Gegensatz dazu sind die Modulplatten unterschiedlicher Solarmodulreihen nicht-koplanar angeordnet und liegen in unterschiedlichen, wenn auch zumeist parallelen Ebenen. Die Montagefüße können universell eingesetzt werden und sind nicht auf bestimmte Modulplattenmaße eingeschränkt.

In einer Ausführungsform des Montagefußes ist zumindest eines der Auflager am freien Ende eines vom Grundkörper nach oben ragenden Schenkels angeordnet. Die einfache Auflagerkonstruktion mittels eines Auflagerschenkels ermöglicht eine fertigungstechnisch einfache Anpassung des Montagefußes, z.B. an einen gewünschten Neigungswinkel der Solarmodule.

Vorzugsweise schließt der Schenkel mit der Standfläche einen spitzen Winkel ein. Dieser sogenannte Anstellwinkel liegt besonders bevorzugt im Bereich von 50° bis 80°, um einerseits rasch die gewünschte Höhe für das jeweilige Auflager zu erreichen und andererseits bei auftretendem Wind den in einer von der Standfläche aufgespannten Ebene auftretenden Staudruck auf ein akzeptables Maß zu reduzieren, um eine Verschiebung des Montagefußes in dieser Ebene zu verhindern. Ein geeigneter Anstellwinkel des Schenkels wirkt sich dann besonders vorteilhaft aus, wenn beispielsweise ein Windschott am Schenkel befestigt wird und somit im Wesentlichen denselben Anstellwinkel aufweist.

Der Schenkel mit dem oberen Auflager umfasst nämlich in einer weiteren Ausführungsform des Montagefußes einen Lagerabschnitt für ein Windschott und/oder ein Ballastelement. Bei einer Windschottlagerung am Schenkel des oberen Auflagers sind die Anstellwinkel des Schenkels und des Windschotts üblicherweise im Wesentlichen identisch. Für die auftretenden Lagerkräfte bei Windlast ist daher die Wahl des Anstellwinkels zwischen dem Schenkel und der Standfläche besonders wichtig. Eine Anpassung dieses Winkels ist bei der Herstellung des Montagefußes mit geringem fertigungstechnischem Aufwand einfach möglich.

Insbesondere kann der Schenkel des oberen Auflagers auf seinen in Querrichtung entgegengesetzten Seiten jeweils einen Lagerabschnitt für angrenzende Windschotte und/oder Ballastelemente aufweisen. In diesem Fall ergibt sich für die Windschotte und/oder Ballastelemente ein Rastermaß, welches besonders vorteilhaft dem der Solarmodule entspricht. In Querrichtung sind mehrere aufeinanderfolgende koplanare Modulplatten angeordnet, wobei zwischen zwei aneinander angrenzenden Modulplatten jeweils zwei Montagefüße angeordnet sind. Der eine Montagefuß bildet dabei zwei Auflager für den oberen Eckbereich der Modulplatten, und der andere Montagefuß bildet zwei Auflager für den unteren Eckbereich der benachbarten Modulplatten, sodass das Rastermaß der Montagefüße in Querrichtung je nach Einbaurichtung der Modulplatten durch deren Länge oder Breite festgelegt wird. Dient der Montagefuß nun gleichzeitig als Lager für zwei in Querrichtung benachbarte Windschotte und/oder Ballastelemente, so vereinfacht sich die Installation des Montagesystems erheblich. Das durch die Modulplatten vorgegebene Raster ist dann mit dem Raster oder einem Vielfachen des Rasters der Windschotte und/oder Ballastelemente identisch, was einen Zuschnitt auf der Baustelle überflüssig macht.

Vorzugsweise ist das untere Auflager des Montagefußes ein Gabellager zur Aufnahme eines Rands der Modulplatte. Ein solches Gabellager ermöglicht eine Lagerung von Modulplatten, deren Plattendicke und/oder Neigungswinkel in einem vorgegebenen Bereich variiert. Somit können für verschiedene Neigungswinkel und/oder Modulplatten mit unterschiedlichen Abmessungen identische Montagefüße verwendet werden. Der Montagefuß ist somit recht universell einsetzbar und muss lediglich bei außergewöhnlichen Abmessungen der Modulplatten und/oder unüblichen Neigungswinkeln konstruktiv angepasst werden.

Der Grundkörper des Montagefußes weist bevorzugt einen Befestigungsabschnitt für eine Längsverbindungsstrebe zwischen in einer Längsrichtung hintereinander angeordneten Montagefüßen auf. Diese Strebe erstreckt sich nach einer Fertigstellung der Solaranlage unterhalb einer Modulplatte. Je nach Lagerung und Belastbarkeit der Modulplatten auf Druck oder Zug können die Längsverbindungsstreben entweder entfallen, lediglich als dünne Zugbänder ausgebildet sein oder als massivere Zug- und Druckprofile. Im Übrigen lässt sich das Montagesystem durch einen einfachen Austausch der Längsverbindungsstreben mit geringem Aufwand auf in Längsrichtung stark variierende Modulabmessungen anpassen.

In einer weiteren Ausführungsform des Montagefußes für Solarmodule umfasst der Grundkörper einen ersten Grundkörperabschnitt mit einem das obere Auflager aufweisenden Schenkel, einen zweiten Grundkörperabschnitt mit einem das untere Auflager aufweisenden Schenkel und einen Verbindungssteg zwischen den Grundkörperabschnitten, wobei die Standfläche im Bereich des Verbindungsstegs unterbrochen ist. Eine Verringerung der Standfläche im Bereich des Verbindungsstegs wirkt sich bei lokal sehr unebenem Untergrund positiv auf die Standsicherheit des Montagefußes aus, da er weniger kippanfällig ist. Außerdem ermöglicht die unterbrochene Standfläche eine Verlegung von Leitungen und Kabeln in Querrichtung unmittelbar auf dem Untergrund, unterhalb des Verbindungsstegs. Durch die Verlegung auf dem Untergrund werden sogenannte "Stolperfallen" vermieden und die Gefahr einer Beschädigung der Leitungen oder Kabel minimiert.

In einer besonders bevorzugten Ausführungsform ist der Montagefuß ein einstückiges Aluminiumteil, insbesondere Aluminium-Druckgußteil. Möglich ist aber auch die Verwendung von Kunststoffen oder Stahl. Eine Herstellung aus Kunststoff wirkt sich sowohl in Bezug auf die Materialkosten als auch in Bezug auf die Fertigungskosten positiv auf das Montagesystem aus. Geeignete Kunststoffe, insbesondere faserverstärkte Kunststoffe, welche die notwendige mechanische Belastbarkeit, Dauerhaftigkeit und Witterungsbeständigkeit aufweisen, sind bereits vergleichsweise preiswert erhältlich. Zudem lassen sich diese Kunststoffe in der Regel gut verarbeiten, sodass selbst komplexe geometrische Formen mit relativ geringem Aufwand hergestellt werden können.

Die gestellte Aufgabe wird auch gelöst durch ein Montagesystem, insbesondere ein Flachdach-Montagesystem für Solarmodule, mit mehreren der oben beschriebenen und in einer Längsrichtung hintereinander angeordneten Montagefüßen, um einen vorderen Rand einer Modulplatte am unteren Auflager eines vorderen Montagefußes und einen hinteren Rand der Modulplatte am oberen Auflager eines hinteren Montagefußes zu lagern, wenigstens einer Längsverbindungsstrebe zum Verbinden von zwei in Längsrichtung benachbarten Montagefüßen und/oder wenigstens einer Querverbindungsstrebe zum Verbinden von zwei in einer Querrichtung benachbarten Montagefüßen.

Das beschriebene Montagesystem ist folglich sehr einfach und universell einsetzbar aufgebaut und lässt sich mit geringem Aufwand zu einer Einheit verbinden, sodass auch bei Windlast eine unerwünschte Verschiebung einzelner Systemabschnitte, beispielsweise einer Solarmodulreihe, weitgehend ausgeschlossen ist.

Vorzugsweise ist zwischen dem Montagefuß und einer Längsverbindungsstrebe ein Befestigungsmittel vorgesehen, das eine Arretierung von Montagefuß und Längsverbindungsstrebe in Längsrichtung an unterschiedlichen Positionen ermöglicht, um unterschiedliche Abstände von hintereinanderliegenden Montagefüßen einzustellen. Dadurch lassen sich beispielsweise Toleranzen oder geringfügige Unterschiede in den Modulabmessungen unterschiedlicher Solarmodulhersteller ausgleichen, ohne dass Systembauteile verändert werden müssen.

Insbesondere kann das Befestigungsmittel Rastgeometrien am Montagefuß und/oder an der Längsverbindungsstrebe aufweisen. Die Rastgeometrien ermöglichen eine rasche Arretierung von Montagefuß und Längsverbindungsstrebe in Längsrichtung, wodurch sich die Installation und Ausrichtung des Montagesystems vereinfacht. Außerdem bleibt durch die Rastgeometrien die Arretierung in Längsrichtung auch dann erhalten, wenn sich zusätzliche Verbindungselemente wie Schrauben oder Klemmen lockern.

Im Übrigen ist zwischen Montagefuß und Längsverbindungsstrebe bevorzugt ein Anschlag vorgesehen, wobei der Anschlag einen Winkelverstellbereich um eine Mittellage begrenzt, in welcher die Längsverbindungsstrebe parallel zur Standfläche verläuft. Dadurch können Unebenheiten oder z.B. aus Drainagegründen vorhandene Gefällewechsel des Untergrunds problemlos ausgeglichen werden.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Ansicht eines erfindungsgemäßen Montagefußes für Solarmodule;
- Figur 2 eine perspektivische Ansicht einer Solaranlage mit einem erfindungsgemäßen Montagesystem, das mehrere erfindungsgemäße Montagefüße aufweist;
- Figur 3 einen Ausschnitt aus einem erfindungsgemäßen Montagesystem für Solarmodule in perspektivischer Ansicht;
- Figur 4 eine Detailansicht des erfindungsgemäßen Montagesystems im Verbindungsbereich zwischen Grundkörper und Längsverbindungsstrebe;
- Figur 5 die Detailansicht gemäß Figur 4 ohne Längsverbindungsstrebe; und
- Figur 6 eine Detailansicht des erfindungsgemäßen Montagesystems im Bereich eines hinteren Endes.

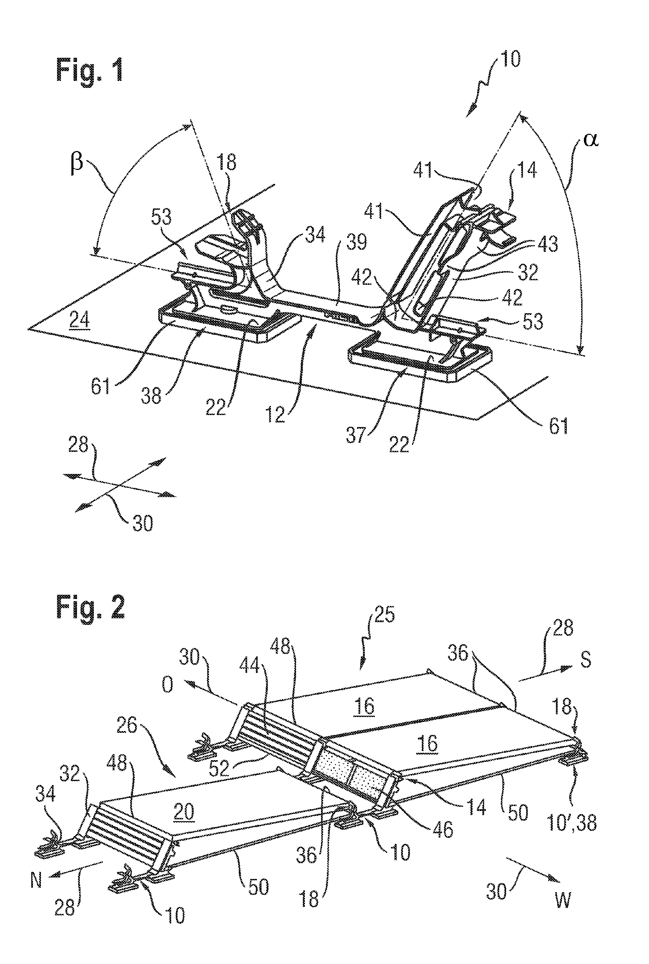

Die Figuren 1 und 2 zeigen einen Montagefuß 10 für Solarmodule, mit einem Grundkörper 12, einem mit dem Grundkörper 12 einstückig verbundenen, oberen Auflager 14 für eine erste schräggestellte Modulplatte 16 und einem mit dem Grundkörper 12 einstückig verbundenen, unteren Auflager 18 für eine zur ersten Modulplatte 16 nicht-koplanare, benachbarte, zweite schräggestellte Modulplatte 20. Der Grundkörper 12 hat wenigstens eine Standfläche 22, mit welcher sich der Montagefuß 10 an einem Untergrund 24, wie z.B. einer Dachhaut eines Flachdachs, abstützen kann. Das obere Auflager 14 weist dabei einen größeren Abstand zu einer von der Standfläche 22 aufgespannten Ebene auf als das untere Auflager 18.

Um die Funktion und Verwendung eines solchen Montagefußes 10 sowie den Unterschied zwischen ersten und zweiten Modulplatten 16, 20 zu verdeutlichen, ist in Figur 2 ein Ausschnitt einer Solaranlage 25 mit einem Montagesystem 26 für Solarmodule dargestellt, wobei das vorliegende Montagesystem 26 ein Flachdach-Montagesystem mit entsprechend horizontalem Untergrund 24 ist und mehrere Montagefüße 10 gemäß Figur 1 aufweist. Das Montagesystem 26 bildet zusammen mit den als Modulplatten 16, 20 ausgebildeten Solarmodulen die Solaranlage 25. Außer auf Flachdächern ist eine Verwendung des Montagesystems 26 auch auf Pultdächern mit geringer Dachneigung oder einem anderen Untergrund 24 mit geringer Neigung denkbar.

Das Montagesystem 26 umfasst mehrere relativ zu einer von der Standfläche 22 aufgespannten Ebene geneigte oder schräggestellte Solarmodule, welche gemäß Figur 2 in zwei Solarmodulreihen mit ersten Modulplatten 16 und zweiten Modulplatten 20 aufgeteilt sind, wobei in Figur 2 ist nur eine zweite Modulplatte 20 gezeigt ist. Als Solarmodulreihe werden dabei alle Modulplatten 16, 20 bezeichnet, welche koplanar, das heißt in einer Ebene liegend, angeordnet sind. Die Modulplatten 16, 20 zweier unterschiedlicher Solarmodulreihen sind hingegen nicht-koplanar angeordnet und liegen entsprechend in unterschiedlichen, wenn auch zumeist im Wesentlichen parallelen Ebenen.

Die Schrägstellung bzw. Neigung der Solarmodule ist in der Regel so ausgerichtet, dass eine Oberseite der Solarmodule nach Süden gewandt ist. Im Folgenden wird eine Neigungsrichtung der Solarmodule als Längsrichtung 28 des Montagesystems 26 definiert, sodass die Längsrichtung 28 bei einer fertiggestellten Solaranlage 25 gemäß Figur 2 üblicherweise der Nord-Süd-Richtung entspricht. Dementsprechend erstreckt sich eine Solarmodulreihe in einer Querrichtung 30, welche üblicherweise der West-Ost-Richtung entspricht.

Mit Bezug auf den Montagefuß 10 gemäß Figur 1 ist sowohl das obere Auflager 14 als auch das untere Auflager 18 am freien Ende eines vom Grundkörper 12 nach oben ragenden Schenkels 32, 34 angeordnet.

Im vorliegenden Ausführungsbeispiel ist das freie Ende des Schenkels 34 mit dem unteren Auflager 18 als Gabellager zur Aufnahme eines (von Süden gesehen) vorderen Rands 36 der Modulplatte 16, 20 ausgebildet (vgl. auch Figur 2). Das Gabellager ist dabei so ausgeführt, dass es ein begrenztes Verschwenken der Modulplatte 16, 20 um das untere Auflager 18 zulässt, sodass der Montagefuß 10 in baugleicher Ausführung für unterschiedliche Neigungswinkel der Solarmodule verwendet werden kann.

Gemäß Figur 1 schließen beide Schenkel 32, 34 für die Auflager 14, 18 jeweils einen spitzen Winkel α, β mit der Standfläche 22 ein, wobei die Schenkel 32, 34 in Längsrichtung 28 jeweils voneinander weg gerichtet sind.

Insbesondere der Schenkel 32 des oberen Auflagers 14 ist vom Schenkel 34 weg gerichtet und schließt einen spitzen (Anstell-)Winkel α, das heißt einen Winkel von 0° < α < 90° mit der Standfläche 22 ein. Aufgrund des bei einer Windbelastung auftretenden Staudrucks liegt der Anstellwinkel α des Schenkels 32 vorzugsweise zwischen 50° und 80°. Anstellwinkel α ≥ 90° sind prinzipiell denkbar, aus dem oben genannten Grund allerdings nur in besonderen Ausnahmefällen sinnvoll.

Der Schenkel 34 des unteren Auflagers 18 ist in der Regel so kurz, dass sein Anstellwinkel β keinen nennenswerten Einfluss auf das Montagesystem 26 hat. Daher kann der in Figur 1 eingezeichnete Anstellwinkel β des Schenkels 34 auch Werte von β ≥ 90° annehmen.

Der Grundkörper 12 des Montagefußes 10 gemäß Figur 1 umfasst einen ersten Grundkörperabschnitt 37 mit dem Schenkel 32, einen zweiten Grundkörperabschnitt 38 mit dem Schenkel 34 und einen Verbindungssteg 39 zwischen den Grundkörperabschnitten 37, 38, wobei die Standfläche 22 im Bereich des Verbindungsstegs 39 unterbrochen ist. Mit anderen Worten gibt es zwei Standflächen 22, welche in vorteilhafter Weise unmittelbar an den Lasteinleitungsstellen der Schenkel 32, 34 des Montagefußes 10 angeordnet sind, sodass eine sichere Lastabtragung in den Untergrund 24 gewährleistet ist. Gegenüber einer einzigen, großen Standfläche 22 bietet diese Ausführungsform bei lokal sehr unebenem Untergrund 24 den Vorteil einer größeren Standsicherheit infolge geringerer Kippneigung.

Außerdem ermöglicht die unterbrochene Standfläche 22 eine Verlegung von Leitungen und Kabeln in Querrichtung 30 unmittelbar auf dem Untergrund 24, unterhalb des Verbindungsstegs 39. Durch wird die Gefahr einer Beschädigung der Leitungen oder Kabel minimiert.

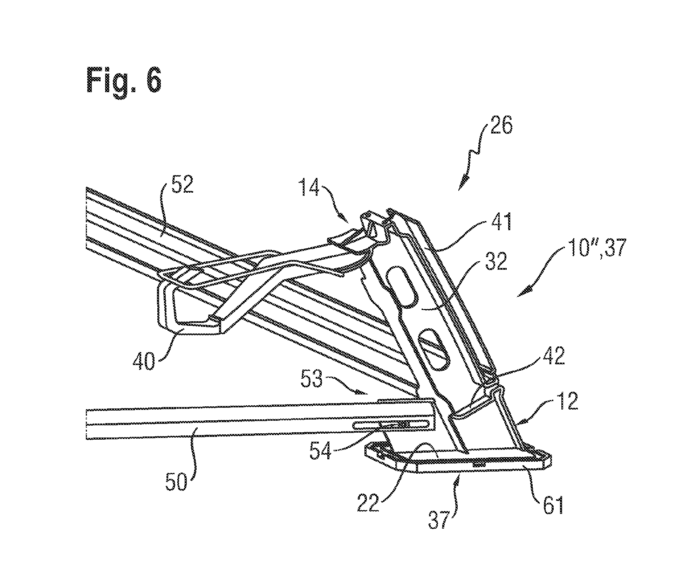

In einer alternativen Ausführungsvariante gemäß Figur 6 erfolgt die Verlegung der Leitungen und Kabel in Querrichtung 30 in einem (nicht dargestellten) Kabelkanal, der mittels einer Kabelkanalhalterung 40 am freien Ende des Schenkels 32 befestigt ist. Die Leitungen und Kabel liegen in diesem Fall nach einer Fertigstellung der Solaranlage 25 geschützt unter den Solarmodulen.

Gemäß Figur 1 sind am Schenkel 32 des oberen Auflagers 14 Lagerabschnitte 41, 42, 43 für ein Windschott 44 und ein Ballastelement 46 (vgl. Figur 2) zu sehen. Der Lagerabschnitt 41 für das Windschott 44 ist dabei eine Nut, welche sich in Längsrichtung des Schenkels 32 erstreckt und seitliche Enden des Windschotts 44 aufnehmen kann. Ein Anstellwinkel des Windschotts 44 entspricht somit dem Anstellwinkel α des Schenkels 32 mit dem oberen Auflager 14. Die Lagerabschnitte 42, 43 für das Ballastelement 46 sind als Abstützfläche im Übergangsbereich zwischen dem Grundkörper 12 und dem Schenkel 32 bzw. als seitlich vorstehende Lagerzunge am Schenkel 32 ausgebildet. Die Lagerabschnitte 42, 43 sind dabei so angeordnet, dass ein Anstellwinkel der plattenförmigen Ballastelemente 46 im wesentlichen dem Anstellwinkel α des Schenkels 32 mit dem oberen Auflager 14 entspricht.

Aus den Figuren 1 und 2 geht außerdem hervor, dass in Querrichtung 30 gesehen am Montagefuß 10 nicht nur zwei Modulplatten 16, 20, sondern auch zwei Windschotte 44 und zwei Ballastelemente 46 aneinandergrenzen. Folglich weist der Schenkel 32 des oberen Auflagers 14 auf seinen in Querrichtung 30 entgegengesetzten Seiten jeweils Lagerabschnitte 41, 42, 43 für angrenzende Windschotte 44 und Ballastelemente 46 auf.

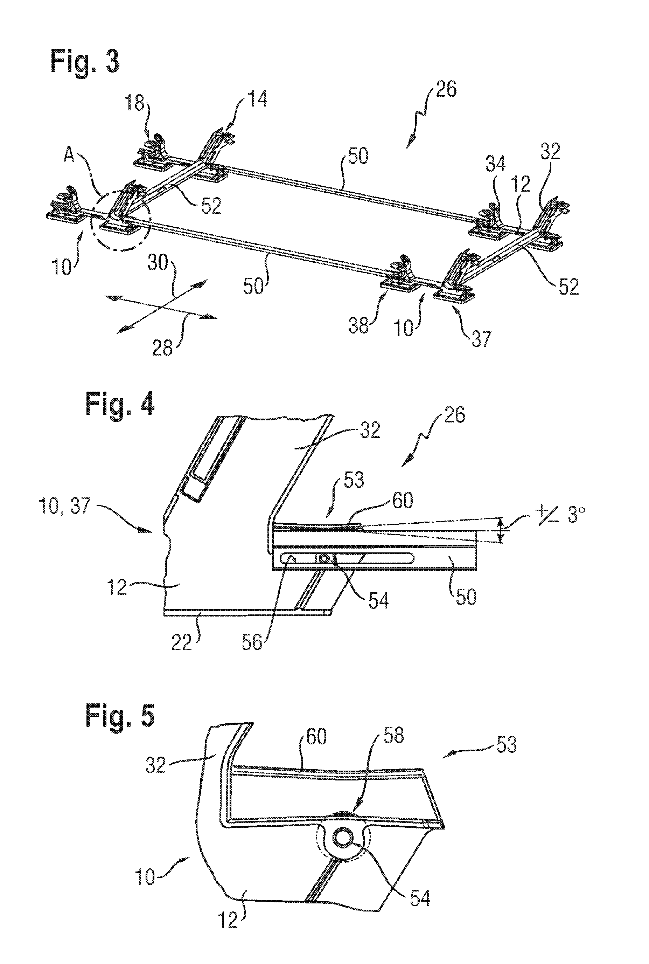

Das Montagesystem 26 weist in Figur 2, wie bereits erläutert, mehrere in Längsrichtung 28 hintereinander angeordneten Montagefüßen 10 auf, um den vorderen Rand 36 einer Modulplatte 16, 20 am unteren Auflager 18 eines vorderen Montagefußes 10 und einen hinteren Rand 48 dieser Modulplatte 16, 20 am oberen Auflager 14 eines hinteren Montagefußes 10 zu lagern. Darüber hinaus umfasst das Montagesystem 26 Längsverbindungsstreben 50 zum Verbinden von zwei in Längsrichtung 28 benachbarten Montagefüßen 10 sowie Querverbindungsstreben 52 zum Verbinden von zwei in Querrichtung 30 benachbarten Montagefüßen 10. Dieser prinzipielle Systemaufbau lässt sich insbesondere auch der Figur 3 entnehmen, in der ein Ausschnitt des Montagesystems 26 dargestellt ist. Die Längsverbindungsstreben 50 sind vorzugsweise aus Kunststoff hergestellt, können alternativ aber auch Metallstreben sein. Hingegen sind die Querverbindungsstreben 52 bevorzugt Metallstreben, insbesondere dann, wenn sie als Auflager für die Ballastelemente 46 dienen. Alternativ sind aber natürlich auch Querverbindungsstreben 52 aus Kunststoff denkbar.

Die Querverbindungsstreben 52 sind vorzugsweise rinnenförmig ausgebildet und erstrecken sich jeweils zwischen zwei benachbarten Montagefüßen 10, wobei die Enden jeder Querverbindungsstrebe 52 an den Montagefüßen 10 befestigt sind. Gemäß Figur 3 sind die Enden der Querverbindungsstrebe 52 in Ausnehmungen der Schenkel 32 eingesteckt und liegen am ebenfalls rinnenförmig ausgebildeten Lagerabschnitt 42 im Übergangsbereich zwischen Grundkörper 12 und Schenkel 32 auf (siehe auch Figur 6).

Die einzelnen Montagefüße 10 gemäß Figur 1 weisen jeweils höhenversetzte Auflager 14, 18 für bis zu vier Modulplatten 16, 20 auf, wobei in den Eck- und Randbereichen des Montagesystems 26 lediglich ein oder zwei Auflager 14, 18 genutzt werden. Insbesondere an dem von Süden gesehen vorderen Ende des Montagesystems 26 werden entsprechend angepasste Montagefüße 10' verwendet, welche im wesentlichen nur aus dem zweiten Grundkörperabschnitt 38 mit den unteren Auflagern 18 bestehen (vgl. Figur 2). Um auch diese angepassten Montagefüße 10' in Querrichtung 30 fixieren zu können, ist hier der Lagerabschnitt 42 zur Aufnahme einer Querverbindungsstrebe 52 ausnahmsweise im Übergangsbereich zwischen dem Grundkörper 12 und dem Schenkel 34 des unteren Auflagers 18 ausgebildet. Auch am hinteren Ende des Montagesystems 26 können angepasste Montagefüße 10" verwendet werden, welche im wesentlichen nur aus dem ersten Grundkörperabschnitt 37 mit den oberen Auflagern 14 bestehen (vgl. Figur 6).

Die Figur 4 zeigt eine Detailansicht A des Montagesystems 26 in einem Verbindungsbereich zwischen Montagefuß 10 und Längsverbindungsstrebe 50, wobei dieser Verbindungsbereich zur Orientierung in Figur 3 gestrichelt eingekreist ist. In Verbindung mit Figur 1 wird klar, dass der Grundkörper 12 des Montagefußes 10 an seinen in Längsrichtung 28 gegenüberliegenden Enden jeweils einen Befestigungsabschnitt 53 für eine Längsverbindungsstrebe 50 aufweist.

Um unterschiedliche Abstände von hintereinanderliegenden Montagefüßen 10 einstellen zu können, ist zwischen der Längsverbindungsstrebe 50 und dem Grundkörper 12 ein Befestigungsmittel 54 vorgesehen ist, das eine Arretierung von Montagefuß 10 und Längsverbindungsstrebe 50 in Längsrichtung 28 an unterschiedlichen Positionen erlaubt. Das Befestigungsmittel 54 umfasst im vorliegenden Fall eine Schraube, die mit einem Langloch 56 in der Längsverbindungsstrebe 50 zusammenwirkt, um eine in Längsrichtung 28 variable Arretierung zu ermöglichen.

Die Figur 5 zeigt die Detailansicht gemäß Figur 4, allerdings ohne die Längsverbindungsstrebe 50. Dadurch ist der Befestigungsabschnitt 53 des Grundkörpers 12 im Detail zu sehen und gut zu erkennen, dass das Befestigungsmittel 54 Rastgeometrien 58 am Montagefuß 10 aufweist. Diese Rastgeometrien 58 wirken bevorzugt mit geeigneten (nicht gezeigten) Rastgeometrien an der Längsverbindungsstrebe 50 zusammen, sodass über die längsverschiebliche Verbindung zwischen Montagefuß 10 und Längsverbindungsstrebe 50 zahlreiche unterschiedliche Rasteingriffe entstehen. Diese Rasteingriffe sorgen bereits ohne Verschraubung für eine Arretierung in Längsrichtung 28, sodass sich das Montagesystem 26 mit geringem Aufwand ausrichten lässt. Durch ein zusätzliches Einstecken und Anziehen der Schraube wird die bereits vorhandene Arretierung mittels der zusammenwirkenden Rastgeometrien 58 danach lediglich gesichert. Im Übrigen ist durch die Rastgeometrien 58 auch dann noch eine gewisse Arretierung in Längsrichtung 28 gewährleistet, wenn sich einzelne Schrauben des Befestigungsmittels 54 im Laufe der Zeit lockern.

Ferner ist zwischen dem Montagefuß 10 und der Längsverbindungsstrebe 50 ein Anschlag 60 vorgesehen, wobei der Anschlag 60 einen Winkelverstellbereich um eine Mittellage begrenzt, in welcher die Längsverbindungsstrebe 50 parallel zur Standfläche 22 verläuft. Dieser Anschlag 60 ist im vorliegenden Ausführungsbeispiel am Montagefuß 10 ausgebildet (vgl. Figur 5) und weist einen Winkelverstellbereich in der Größenordnung von etwa ±3° um die Mittellage auf (vgl. auch Figur 4). Durch diesen Winkelverstellbereich können Unebenheiten sowie zum Beispiel aus Drainagegründen vorhandene Gefällewechsel des Untergrunds 24 ausgeglichen werden.

Da das Montagesystem 26 starken Temperaturschwankungen unterliegt und sowohl in Längsrichtung 28 als auch in Querrichtung 30 gewöhnlich Abmessungen von mehreren Metern erreicht, sind die auftretenden Dehnungen durch Temperaturänderung beachtlich. Damit diese Temperaturdehnungen nicht zu unerwünscht großen Spannungen innerhalb des Montagesystems 26 führen, können z.B. in Längsrichtung 28 und/oder in Querrichtung 30 eher mittig angeordnete Montagefüße 10 in einer von ihren Standflächen 22 aufgespannten Ebene als Festlager und die übrigen Montagefüße 10 in dieser Ebene als Gleitlager ausgebildet sein. Hierzu sind bevorzugt Gleitschuhe 61, wie in den Figuren 1 und 6 angedeutet, vorgesehen, sodass sich die Montagefüße 10 über ihre Standfläche 22, optionale Gleiteinlagen und die Gleitschuhe 61 am Untergrund 24 abstützen.

Der Montagefuß 10 ist vorzugsweise einstückig aus Aluminium, insbesondere als Aluminium-Druckgußteil hergestellt. Alternativ ist selbstverständlich auch die Verwendung von Kunststoff, insbesondere faserverstärktem Kunststoff, oder Stahl möglich. Aus Kunststoffen lassen sich auch relativ komplexe geometrische Formen wie der Montagefuß 10 mit relativ geringem Aufwand herstellen. Ferner sind für den Montagefuß 10 geeignete Kunststoffe mit ausreichender Festigkeit, Dauerhaftigkeit und Witterungsbeständigkeit vergleichsweise preiswert erhältlich, sodass sich der Montagefuß 10 insgesamt sehr kostengünstig fertigen lässt. Alternativ ist selbstverständlich auch eine mehrteilige Herstellung des Montagefußes 10 denkbar.

## Patentansprüche

1. Montagefuß für Solarmodule, mit
einem Grundkörper (12), der wenigstens eine Standfläche (22) hat, mit welcher sich der Montagefuß (10) an einem Untergrund (24) abstützen kann,
einem mit dem Grundkörper (12) verbundenen, oberen Auflager (14) für eine erste schräggestellte Modulplatte (16) und
einem mit dem Grundkörper (12) verbundenen, unteren Auflager (18) für eine zur ersten Modulplatte (16) nicht-koplanare, benachbarte, zweite schräggestellte Modulplatte (20),
wobei das obere Auflager (14) einen größeren Abstand zu einer von der Standfläche (22) aufgespannten Ebene aufweist als das untere Auflager (18).

2. Montagefuß nach Anspruch 1, **dadurch gekennzeichnet, dass** zumindest eines der Auflager (14, 18) am freien Ende eines vom Grundkörper (12) nach oben ragenden Schenkels (32, 34) angeordnet ist.

3. Montagefuß nach Anspruch 2, **dadurch gekennzeichnet, dass** der Schenkel (32, 34) mit der Standfläche (22) einen spitzen Winkel (α, β) einschließt.

4. Montagefuß nach Anspruch 2 oder 3, **dadurch gekennzeichnet, dass** der Schenkel (32) des oberen Auflagers (14) einen Lagerabschnitt (41, 42, 43) für ein Windschott (44) und/oder ein Ballastelement (46) aufweist.

5. Montagefuß nach einem der Ansprüche 2 bis 4, **dadurch gekennzeichnet, dass** der Schenkel (32) des oberen Auflagers (14) auf seinen in einer Querrichtung (30) entgegengesetzten Seiten jeweils einen Lagerabschnitt (41, 42, 43) für angrenzende Windschotte (44) und/oder Ballastelemente (46) aufweist.

6. Montagefuß nach einem der vorhergehenden Ansprüche, **dadurch gekennzeichnet, dass** das untere Auflager (18) ein Gabellager zur Aufnahme eines Rands (36) der Modulplatte (16, 20) ist.

7. Montagefuß nach einem der vorhergehenden Ansprüche, **dadurch gekennzeichnet, dass** der Grundkörper (12) einen Befestigungsabschnitt (53) für eine Längsverbindungsstrebe (50) zwischen in einer Längsrichtung (28) hintereinander angeordneten Montagefüßen (10) aufweist.

8. Montagefuß nach einem der vorhergehenden Ansprüche, **dadurch gekennzeichnet, dass** der Grundkörper (12) einen ersten Grundkörperabschnitt (37) mit einem das obere Auflager (14) aufweisenden Schenkel (32), einen zweiten Grundkörperabschnitt (38) mit einem das untere Auflager (18) aufweisenden Schenkel (34) und einen Verbindungssteg (39) zwischen den Grundkörperabschnitten (37, 38) umfasst, wobei die Standfläche (22) im Bereich des Verbindungsstegs (39) unterbrochen ist.

9. Montagefuß nach einem der vorhergehenden Ansprüche, **dadurch gekennzeichnet, dass** der Montagefuß (10) ein einstückiges Aluminiumteil ist.

10. Montagesystem, insbesondere Flachdach-Montagesystem für Solarmodule, mit
mehreren in einer Längsrichtung (28) hintereinander angeordneten Montagefüßen (10) nach einem der vorhergehenden Ansprüche, um einen vorderen Rand (36) einer Modulplatte (16, 20) am unteren Auflager (18) eines vorderen Montagefußes (10) und einen hinteren Rand (48) der Modulplatte (16, 20) am oberen Auflager (14) eines hinteren Montagefußes (10) zu lagern,
wenigstens einer Längsverbindungsstrebe (50) zum Verbinden von zwei in Längsrichtung (28) benachbarten Montagefüßen (10), und/oder
wenigstens einer Querverbindungsstrebe (52) zum Verbinden von zwei in einer Querrichtung (30) benachbarten Montagefüßen (10).

11. Montagesystem nach Anspruch 10, **dadurch gekennzeichnet, dass** ein Befestigungsmittel (54) zwischen Montagefuß (10) und Längsverbindungsstrebe (50) vorgesehen ist, das eine Arretierung von Montagefuß (10) und Längsverbindungsstrebe (50) in Längsrichtung (28) an unterschiedlichen Positionen ermöglicht, um unterschiedliche Abstände von hintereinanderliegenden Montagefüßen (10) einzustellen.

12. Montagesystem nach Anspruch 11, **dadurch gekennzeichnet, dass** das Befestigungsmittel (54) Rastgeometrien (58) am Montagefuß (10) und/oder an der Längsverbindungsstrebe (50) aufweist.

13. Montagesystem nach einem der Ansprüche 10 bis 12, **dadurch gekennzeichnet, dass** ein Anschlag (60) zwischen Montagefuß (10) und Längsverbindungsstrebe (50) vorgesehen ist, wobei der Anschlag (60) einen Winkelverstellbereich um eine Mittellage begrenzt, in welcher die Längsverbindungsstrebe (50) parallel zur Standfläche (22) verläuft.
